# EUROPÄISCHE PATENTSCHRIFT

(11) **EP 3 940 208 B1**
(45) Veröffentlichungstag und Bekanntmachung des Hinweises auf die Patenterteilung: **02.10.2024**
(21) Anmeldenummer: 21185106.8
(22) Anmeldetag: 12.07.2021
(51) Int. Cl.: F01M 13/04

(54) **AEROSOLSEPARATOR ZUM ABSCHEIDEN VON AEROSOLEN IN EINEM BLOW-BY-GAS**
AEROSOL SEPARATOR FOR THE SEPARATION OF AEROSOLS IN A BLOW-BY-GAS
SÉPARATEUR D'AÉROSOL PERMETTANT DE SÉPARER LES AÉROSOLS DANS UN GAZ DE FUITE

(30) Priorität: 15.07.2020 CH 8782020
(43) Veröffentlichungstag der Anmeldung: 19.01.2022
(73) Patentinhaber: Deere & Company, Moline, IL 61265 (US); Liebherr Machines Bulle SA, 1630 Bulle (CH)
(72) Erfinder: LI, Zhi, 1630 Bulle (CH); PALMISANI, Domenico, 10044 Panezza (IT); REDFERN, Kyle D., Cedar Falls 50613 (US)
(74) Vertreter: Laufhütte, Dieter

(56) Entgegenhaltungen:
- EP-A1- 3 805 531
- WO-A1-2019/230310
- CN-A- 106 762 033
- DE-A1- 102009 018 000
- DE-A1- 102010 027 783
- JP-U- S5 922 911
- JP-U- S62 116 111

## Beschreibung

Die vorliegende Erfindung betrifft einen Aerosolseparator zum Abscheiden von Aerosolen in einem Blow-by-Gas.

Im Betrieb einer Verbrennungskraftmaschine strömt auch im Fall von unversehrten Kolbenringen ein kleiner Anteil der sich im Brennraum befindlichen Gase zwischen dem Kolben und der Laufbuchse bzw. zwischen dem Kolben und der Kolbenbohrung in das Kurbelgehäuse. Der Teilbereich der Umhüllung des Brennraums, die durch den Kolben und der Wand entlang der Kolben geführt ist, gebildet ist, ist demnach nicht perfekt "abgedichtet", sondern es kommt zu einem Ausströmen von sogenanntem Blow-by-Gas im Grenzbereich von dem Kolben und der Zylinderbohrung bzw. der Laufbuchse. Dieses Blow-by-Gas besteht aus Verbrennungsabgas, unverbranntem bzw. teilverbranntem Kraftstoff sowie Wasserdampf und muss zur Vermeidung eines sich aufbauenden Überdrucks im Kurbelgehäuse kontrolliert abgeführt werden.

Problematisch ist, dass das Blow-by-Gas eine kleine Menge von festen Schwebeteilchen, wie z.B. Russ enthält und es entlang seines Strömungspfads durch das Kurbelgehäuse eine gewisse Menge an Motoröl mitreisst, das sich dann als Ölnebel, d. h. als zusätzliche Aerosole im Blow-by-Gas befindet.

Im Zuge der ökologischen Verträglichkeit der Motoremissionen und der Abgasgesetzgebung ist es nicht mehr möglich, das Blow-by-Gas, welches zusätzlich durch besagte Aerosole kontaminiert ist, einfach an die Umgebung abzugeben. Es ist daher bei modernen Motoren vorgesehen, das Blow-by-Gas über den Ansaugtrakt erneut einem Brennraum zuzuführen.

Vor dem Erreichen des Ansaugtrakts muss das Blow-by-Gas eine oder mehrere Vorrichtungen, die zu einer Abtrennung bzw. Abscheidung der Aerosole dienen, durchlaufen. Aerosole, die nicht abgeschieden werden, können sich bspw. im Verdichter oder im Ladeluftkühler absetzen und zu entsprechenden Schädigungen führen. Bei der Aerosolabtrennung ist die Abscheidung der Öltröpfchen besonders wichtig, da diese bei der Verbrennung in sogenannte Ölkohle umgewandelt werden können, die durch Ablagerung zu einer voranschreitenden Motorschädigung führt, die wiederum einen vorzeitigen Motorausfall bewirken kann. Hierbei sind die Zylinderkopf-Ventile und die Kraftstoffeinspritzdüsen besonders gefährdet. Weiter kann Ölkohle, die den Brennraum verlässt, zu Schädigungen der Turbine des Abgasturboladers und/oder des Abgasnachbehandlungssystems führen. Zur Vermeidung solcher Probleme werden die Aerosole, darunter auch die den Ölnebel bildenden Öltröpfchen vor einem Einführen in den Ansaugtrakt der Verbrennungskraftmaschine abgeschieden. Zur Minimierung eines Ölverlusts, wird das in dem Blow-by-Gas vorhandene Motoröl nach einer Abscheidung wieder dem Motorölkreislauf zugeführt.

Die Abscheidung des Motoröls aus dem Blow-by-Gas erfolgt dabei häufig über zwei strömungstechnisch hintereinander geschaltete Filter, die auf unterschiedlichen Wirkprinzipien beruhen.

Die vorliegende Erfindung betrifft die strömungstechnisch gesehen erste Filterstufe, die als Ölseparator oder Aerosolseparator bezeichnet wird. Es handelt sich um einen Schwebstofffilter, der mithilfe der Schwerkraft einen möglichst großen Anteil der im Blow-by-Gas mitgerissenen Aerosole abscheiden soll, so dass ein so gereinigtes Blow-by-Gas, vorzugsweise nach Durchlaufen einer zweiten Filtration, dem Ansaugtrakt zugeführt werden kann ohne dabei eine nennenswerte Ölverbrennung zu riskieren und ohne dabei die Verbrennungskraftmaschine zu schädigen.

In Bezug auf den Strömungspfad wird der Aerosolseparator möglichst unmittelbar an das Ende desjenigen Blow-by-Gas Pfadabschnittes installiert, an dem noch weiteres Motoröl in das Blow-by-Gas eintreten kann. Aufgrund der allgemeinen Bauraum-Situation der meisten Verbrennungskraftmaschinen ist ein solches Schwebstofffilter oberhalb des Zylinderkopfes angeordnet und wird durch die Zylinderkopfabdeckhaube verschlossen. Der genannte Einbauort bietet u.a. den Vorteil, dass das abgeschiedene Motoröl aufgrund der Schwerkraft in den Bereich abtropfen kann, in dem sich der ohnehin mit Motoröl zu versorgende Ventiltrieb befindet.

Es ist nun die Aufgabe der Erfindung die Abscheiderate eines Aerosolseparators zu verbessern, damit ein möglichst hoher Anteil der Aerosole aus dem Blow-by-Gas abgeschieden werden und die sich darunter befindenden Öltröpfchen wieder dem Ölkreislauf zurückgeführt werden kann.

Aus der CN 106 762 033 A ist ein Aerosolseparator bekannt, der sämtliche Merkmale aus dem Oberbegriff des Anspruchs 1 aufweist.

Dies gelingt mit einem Aerosolseparator, der sämtliche Merkmale des Anspruchs 1 aufweist. Durch einen speziell gestalteten Strömungspfad für das das Blow-by-Gas und/oder einer optionalen, vorteilhaften Platzierung der Ölabfluss-Öffnungen entlang des Strömungspfads wird ein sehr hoher Anteil der Aerosole aus dem Blow-by-Gas abgeschieden und eine effiziente Rückführung des abgeschiedenen Motoröls in den Motorölkreislauf bewirkt. Weitere vorteilhafte Ausgestaltungen der Erfindung finden sich in den abhängigen Ansprüchen.

Demnach ist vorgesehen, dass der erfindungsgemäße Aerosolseparator zum Abscheiden von Aerosolen in einem Blow-by-Gas mindestens eine Zuführöffnung zum Zuführen eines mit Aerosolen versehenen Blow-by-Gases, eine Auslassöffnung zum Abführen eines von Aerosolen gereinigten Blow-by-Gases, mindestens eine Abflussöffnung zum Ablassen von aus dem Blow-by-Gas entnommenen Aerosol, die zwischen einem Strömungspfad der mindestens einen Zuführöffnung und der Auslassöffnung angeordnet ist, und mehrere Stege zum mäanderförmigen Ausgestalten des von der mindestens einen Zuführöffnung zu der Abflussöffnung verlaufenden Strömungspfads umfasst, um das in die Zuführöffnung eintretende, mit Aerosolen versehene Blow-by-Gas in seiner Strömungsgeschwindigkeit zu verlangsamen. Ferner ist der Aerosolseparator dadurch gekennzeichnet, dass die Stege in ihrem vom Blow-by-Gas umströmten Endbereich einen Abschnitt mit zunehmender Stegbreite aufweisen.

Alternativ und/oder zusätzlich kann vorgesehen sein, dass der erfindungsgemäße Aerosolseparator zum Abscheiden von Aerosolen in einem Blow-by-Gas mindestens eine Zuführöffnung zum Zuführen eines mit Aerosolen versehenen Blow-by-Gases, eine Auslassöffnung zum Abführen eines von Aerosolen gereinigten Blow-by-Gases, mindestens eine Abflussöffnung zum Ablassen von aus dem Blow-by-Gas entnommenen Aerosol, die zwischen einem Strömungspfad der mindestens einen Zuführöffnung und der Auslassöffnung angeordnet ist, und mehrere Stege zum mäanderförmigen Ausgestalten des von der mindestens einen Zuführöffnung zu der Abflussöffnung verlaufenden Strömungspfads umfasst, um das in die Zuführöffnung eintretende, mit Aerosolen versehene Blow-by-Gas in seiner Strömungsgeschwindigkeit zu verlangsamen. Ferner ist der Aerosolseparator dadurch gekennzeichnet, dass die mindestens eine Abflussöffnung in einer Serpentine, insbesondere einer Kurve, d.h. dem kurvenförmigen Teil einer Serpentine des mäanderförmig ausgestalteten Strömungspfads angeordnet ist.

Das Blow-by-Gas wird dem Aerosolseparator über die Zuführöffnung eingeleitet und über einen mäanderartig ausgestalteten Strömungspfad geführt, der mit mindestens einer Abflussöffnung versehen ist, an der die aufgrund der Schwerkraft separierten Aerosole abfließen können. Der um diese Aerosole verminderte Gasstrom wird dann über eine Auslassöffnung aus dem Separator herausgeführt.

Die mäanderartige Ausgestaltung des Strömungspfads wird durch Stege erreicht, die in ihrem vom Blow-by-Gas umströmten Endbereich einen Abschnitt mit zunehmender Stegbreite aufweisen.

Die zur mäanderartigen Umlenkung des Strömungspfads hervorrufende Struktur des Aerosolseparators wird im Folgenden auch als *Labyrinth* bezeichnet. Die Stege stehen dabei einer direkten Strömung von der Zuführöffnung zur Abflussöffnung im Weg, so dass die typisch mäanderförmige Strömung erzwungen wird.

Dem Fachmann ist klar, dass einer Mäanderform im Sinne der Erfindung, ein Zickzack-Muster, ein Sägezahnmuster, einen sinusförmigen Verlauf und Ähnliches sowie eine Kombination davon ebenfalls umfasst.

Die durch die Stege hervorgerufene Mäanderform führt bei einer günstig ausgelegten Kanalbreite zu einer globalen Verlangsamung der eingeleiteten Strömung, d.h. eine Verlangsamung der Geschwindigkeit in der Strömungshauptrichtung von der Zuführöffnung zur Abflussöffnung, sowie einer weitgehenden Vermeidung von Turbulenzen. Das heißt, die durch die Stege hervorgerufene Mäanderform führt bei einer günstig ausgelegten Kanalbreite dazu, dass in allen eng begrenzten Bereichen, in denen zwar eine erhöhte Strömungsgeschwindigkeit vorliegt, der Größenunterschied zu der mittleren Strömungsgeschwindigkeit möglichst niedrig ist.

Dabei hat es sich als besonders vorteilhaft herausgestellt, wenn die Stege in ihrem von Blow-by-Gas umströmten Endbereich einen Abschnitt mit zunehmender Stegbreite aufweisen. Diese Stegform erzeugt besonders geringe Turbulenzen, so dass die Aerosole - möglichst ungestört von möglichen Verwirbelungen der Strömung - aufgrund der herrschenden Schwerkraft nach unten absinken, am Boden des Separators anhaften und über die Abflussöffnung abgeschieden werden können.

Das häufige Umlenken der Blow-by-Gas-Strömung führt zu einer verlängerten Strecke, welches von der Zuführöffnung hin zur Auslassöffnung zurückgelegt werden muss, so dass ein längerer Zeitraum für das Absinken der Aerosole vorliegt und demzufolge ein höherer Anteil an Aerosolen entlang dieser Strecke absinken kann.

Nach einer optionalen Modifikation der vorliegenden Erfindung kann vorgesehen sein, dass die Stege in ihrem Endbereich verrundet ausgeformt sind, vorzugsweise zu ihrem Ende hin in einer Tropfenform auslaufen.

Dadurch wird sichergestellt, dass bei einem Umlenken der Strömung möglichst wenig Turbulenzen hervorgerufen werden, so dass das Absinken der Aerosole in dem Blow-by-Gas nicht gestört wird.

Weiter kann vorgesehen sein, dass die mehreren Stege jeweils eine Längsrichtung aufweisen, die parallel oder in etwa parallel zueinander verlaufen. Durch diese Struktur wird ein in seinem Strömungsquerschnitt in etwa gleichbleibender Strömungskanal geschaffen, so dass es nicht zu ungewünschten Geschwindigkeitsvariationen der durchgeführten Strömung kommt. Würden hingegen entlang des Strömungspfads Engstellen vorliegen, käme es zu lokalen Anstiegen der Strömungsgeschwindigkeit, was das Absinken der Aerosole auf den Boden behindert und daher weniger wahrscheinlich macht. Zudem führt eine Variation der Geschwindigkeit in der Regel auch zu Wirbeln, die das Absinken der Aerosole behindern.

Dabei kann vorgesehen sein, dass der Endbereich eines jeweiligen Stegs dessen distales Drittel, vorzugsweise Viertel, bevorzugterweise Fünftel der Gesamtlänge des zugehörigen Stegs darstellt.

Ein jeder Steg geht von einem Wandelement aus und führt zu einem Umlenken des Strömungspfads in der bereits oben erläuterten Mäanderform. Das dabei von der Strömung umströmte Ende, also das von der Wand abstehende Ende des Stegs weist in seinem von der Wand entfernten Endbereich einen sich aufweitenden Durchmesser auf, der in einer optionalen Ausführungsform zu einer tropfenartigen Gestaltung des Endbereichs in einer Schnittansicht des Stegs führt.

Nach einer bevorzugten Ausführungsform der vorliegenden Erfindung kann vorgesehen sein, dass die mehreren Stege gegenüber einer Resultierenden der mäanderförmigen Strömungsrichtung des Strömungspfads und/oder einer Längsrichtung des Separators nicht senkrecht stehen, sondern vorzugsweise damit einen spitzen Winkel einschließen, der bevorzugterweise zwischen 90° und 45° liegt.

Die Ausbreitungsrichtung des Mäanders verläuft im Wesentlichen parallel zur Längsrichtung des Separators. Die das Mäander schaffenden Stege sind aber vorzugsweise nicht senkrecht zur Längsrichtung des Separators angeordnet, sondern verlaufen schräg dazu, wobei sie bevorzugterweise einen Winkel mit der Längsrichtung des Aerosolseparators und/oder der Ausbreitungsrichtung des Mäanders einschließen, der zwischen 90° und 45° liegt, bevorzugterweise zwischen 90° und 70° liegt.

Nach der Erfindung kann ferner vorgesehen sein, dass der Aerosolseparator einen im Wesentlichen länglichen Grundaufbau und an seinen beiden gegenüberliegenden Breitenseiten jeweils eine Zuführöffnung aufweist, die jeweils zu der in Längsrichtung im mittleren Drittel, vorzugsweise im mittleren Fünftel angeordneten Abflussöffnung über einen durch Stege mäanderförmig ausgestalteten Strömungspfad führen.

Insgesamt gibt es demnach zwei mäanderförmig ausgestaltete Strömungspfade, von denen jeder von einem der beiden Zuführöffnungen hin zur Abflussöffnung führt. Von dort aus kann sich der Strömungspfad entlang eines einzigen Strömungskanal zur Auslassöffnung erstrecken, an der das möglichst aerosolfreie Blow-by-Gas ausgegeben wird.

Dabei kann ferner vorgesehen sein, dass die beiden von gegenüberliegenden Breitenseiten zur Abflussöffnung führenden Strömungspfade jeweils mehrere Stege aufweisen, jeder der beiden Strömungspfade mehrere Stege aufweist, deren jeweilige Längsrichtungen parallel oder in etwa parallel zueinander verlaufen, und die Stege der beiden Strömungspfade nicht parallel zueinander ausgerichtet sind.

Vorzugsweise kann vorgesehen sein, dass die Stege der beiden Strömungspfade einen Winkel im Bereich von 40° - 15°, vorzugsweise 35° - 25° einschließen.

Nach einer optionalen Fortbildung sind dabei die Stege jeweils so zu ihren jeweiligen Zuführöffnungen geneigt, dass der Strömungspfad hin zur Abflussöffnung verlängert ist, um das Absinken von Aerosolen entlang des Strömungspfads zu fördern.

Nach einer Fortbildung der Erfindung kann vorgesehen sein, dass Teile des von dem Blow-by-Gas durchströmten Raum oder der gesamte von dem Blow-by-Gas durchströmte Raum in dem Aerosolseparator durch eine kantenfreie, vorzugsweise tangentenstetige Oberfläche begrenzt ist. Vorzugsweise ist der mäanderförmig ausgestaltete Teil des Strömungspfads durch eine kantenfreie, vorzugsweise tangentenstetige Oberfläche begrenzt.

Zudem kann nach einer weiteren Modifikation der Erfindung vorgesehen sein, dass Teile des von dem Blow-by-Gas durchströmten Raumes oder der gesamte von dem Blow-by-Gas durchströmte Raum in dem Aerosolseparator durch eine Oberfläche begrenzt ist, die eine raue Oberfläche aufweist, um das Anhaften von Aerosolen zu begünstigen, wobei vorzugsweise die Stege mit einer rauen Oberflächenkontur versehen sind. Zusätzlich oder alternativ kann der mäanderförmig ausgestaltete Teil des Strömungspfads durch einen Raum definiert sein, der eine raue Oberflächenkontur aufweist.

Ferner kann vorgesehen sein, dass der durch die Stege mäanderförmig ausgestaltete Strömungspfad von der Zuführöffnung zur Abflussöffnung eine Höhe aufweist, die in etwa konstant ist, also um weniger als 10%, vorzugsweise um weniger als 5% von einer maximalen Höhe abnimmt.

Durch das Beibehalten einer konstanten Höhe wird die Ausbildung von für das Absinken von Aerosolen besonders ungünstigen Vertikalwirbeln vermieden. Variiert man die Höhe des Strömungskanals, kann dies zu Wirbeln in der Höhenrichtung des Separators führen, die sogar zu einem Aufsteigen der Aerosole in dem Blow-by-Gas führen können.

Nach der vorliegenden Erfindung ist vorgesehen, dass:
der Aerosolseparator um die Achse seiner Längsausdehnung geneigt ist. Ferner dazu kann die Abflussöffnung oder können mehrere Abflussöffnungen in einem tieferliegenden Bereich des schräg gestellten Separators angeordnet sein, um einen Zufluss von einer an einem Bodenbereich fließenden Aerosolansammlung zu erleichtern, und/oder.
mindestens eine Abflussöffnung stromabwärts des mäanderartig ausgeformten Strömungspfads angeordnet ist und alternativ oder zusätzlich dazu, mindestens eine Abflussöffnung in einer oder mehreren Kurven des mäanderförmigen Strömungspfads angeordnet ist. Dabei wird die Abflussöffnung also in eine Kurve einer Serpentine des Mäanders angeordnet, da hier die Strömungsbedingungen vorteilhaft zum Erzeugen von wirbelartigen Strömungen sind, so dass in einem solchen Wirbel Aerosole besonders effektiv nach unten herabfallen.

Der Separator weist demnach eine Bodenfläche auf, die um die Längsrichtung oder einer dazu parallelen Achse verdreht ist, so dass eine der Längsseiten des Separators tiefer liegt als die gegenüberliegende Längsseite des Aerosolseparators. Eine solche Schiefstellung des Aerosolseparators bzw. eine Schiefstellung der Bodenfläche des Aerosolseparators führt beim Ablagern von Öltröpfchen an der Bodenfläche zu einer Fließbewegung zur tiefergelegenen Längsseite. In Bezug auf Feststoff-Aerosole, wie bspw. Russpartikel können diese nach dem Erreichen der Bodenfläche durch das dort nach und nach ansammelnde Öl und dessen Abfliessen zur tiefergelegenen Längsseite mitbewegt werden. Demnach kann es von Vorteil sein, die Abflussöffnung nahe der tiefergelegten Längsseite zu platzieren, da die am Boden befindlichen Aerosole schwerkraftbedingt hin zur Abflussöffnung fließen bzw. dorthin mitbewegt werden. Da das durch die Stege gebildete Mäander sich parallel zur Längsrichtung ausbreitet, liegen die Scheitelpunkte der Mäanderform entweder nahe der tiefergelegten Längsseite oder nahe der höhergelegten Längsseite. Dies führt dazu, dass die Aerosolteilchen hin zu denjenigen Kurven des Mäanders fließen, die auf der tieferliegenden Längsseite angeordnet sind. Es kann daher von Vorteil sein, wenn eine weitere Abflussöffnung in mindestens einer der Kurven des Mäanders angeordnet ist, die nahe des tieferliegenden Längsendes einer Serpentine des Mäanders angeordnet ist oder an einem solchen Längsende.

Nach einer weiteren vorteilhaften Modifikation kann vorgesehen sein, dass die mindestens eine Abflussöffnung in einem Scheitelbereich des mäanderförmig ausgestalteten Strömungspfads angeordnet ist und/oder stromabwärts des mäanderförmigen Strömungspfads kurz vor der Auslassöffnung angeordnet ist, und/oder die mindestens eine Abflussöffnung in einer zum Rest des Strömungspfads von der Zuführöffnung zur Auslassöffnung vorgesehenen Vertiefung angeordnet ist, und/oder die mindestens eine Abflussöffnung in einem Bereich des Strömungspfads angeordnet ist, der sich durch eine besonders geringe Strömungsgeschwindigkeit eines durch den Aerosolseparator strömenden Blow-by-Gases auszeichnet, also eine Strömungsgeschwindigkeit aufweist, die zum langsamsten Drittel, vorzugsweise langsamsten Viertel der Strömungsgeschwindigkeiten gehört, und/oder die mindestens eine Abflussöffnung in einem Bereich des Aerosolseparators angeordnet ist, in denen lokal aus verschiedenen Richtungen kommende Teilströmungen aufeinandertreffen, und/oder die mindestens eine Abflussöffnung in einem Bodenbereich des Aerosolseparators angeordnet ist, die vorzugsweise durch eine Bohrung die Grundplatte des Separators durchstößt.

Vorzugsweise ist mindestens ein Rückschlagventil vorgesehen, das eine jeweilige Abflussöffnung abdeckt, um zu verhindern, dass eigentlich abfließende Aerosole entgegen der ursprünglich vorgesehenen Abflussrichtung in den Aerosolseparator einströmen und/oder Aerosole von dem sich unterhalb des Aerosolseparators befinden Hohlraum über eine Abflussöffnung in den Aerosolseparator gelangen können. Dabei können diese Rückschlagventile Schirmventile sein, die eine Strömungsrichtung von Aerosolen und Dämpfen bzw. Gasen in den Aerosolseparator hinein unterbinden.

Weiter kann nach einer Variation der Erfindung vorgesehen sein, dass eine Abflussöffnung mehrere Bohrungen durch das Unterteil des Separators umfassen kann, die sämtlich durch ein gemeinsames Rückschlagventil abgedeckt sind.

Nach einer weiteren optionalen Fortbildung der Erfindung kann vorgesehen sein, dass die Kanalweite und damit der Querschnitt des Strömungspfads oder der Strömungspfade in den Bereichen zwischen den Stegenden und dem jeweils zum Ende des Stegs gegenüberliegen Wandbereich erheblich größer als zwischen den zwei benachbarten Stegen ist.

Weiter kann nach einer Variante der Erfindung vorgesehen sein, dass sich in einer oder mehrerer Serpentinen - insbesondere in kurvenförmigen Abschnitten - des mäanderartigen Strömungspfades oder der mäanderartigen Strömungspfade mindestens eine Abflussöffnung angeordnet ist, die in Bezug auf die Hauptströmungsrichtung entlang der beiden Strömungspfade 5 stets vor den Scheitelpunkten einer jeweiligen Serpentine bzw. Kurve angeordnet ist.

Die Erfindung betrifft zudem eine Verbrennungskraftmaschine mit einem Aerosolseparator zum Abscheiden von Aerosolen in einem Blow-by-Gas nach mindestens einem der vorhergehenden Merkmale, wobei vorzugsweise der Aerosolseparator oberhalb der Zylinderkopfbank angeordnet ist und/oder sich unterhalb des Zylinderkopfdeckels befindet.

Weitere Vorteile, Merkmale und Einzelheiten der Erfindung werden aufgrund der nachfolgenden Figurenbeschreibung ersichtlich. Dabei zeigen:
- Fig. 1:: ein Blockschaltbild zur Erläuterung der Anordnung des Aerosolseparators in einer Verbrennungskraftmaschine,
- Fig. 2:: eine perspektivische Ansicht einer Verbrennungskraftmaschine mit einem im Zylinderkopfdeckel integrierten Aerosolseparator gemäss der Erfindung,
- Fig. 3:: eine Schnittansicht eines Zylinderkopfdeckels mit erfindungsgemäßem Aerosolseparator,
- Fig. 4a:: eine Schnittansicht des Aerosolseparators, angeordnet im Zylinderkopfdeckel,
- Fig. 4b:: eine Schnittansicht des Aerosolseparators, angeordnet im Zylinderkopfdeckel, ohne Ventile in den Abflussöffnungen,
- Fig. 5a:: eine Draufsicht auf die Grundplatte des Aerosolseparators nach der Erfindung,
- Fig. 5b:: eine perspektivische Ansicht der Grundplatte des Aerosolseparators,
- Fig. 6:: eine Darstellung der unterschiedlichen Evolutionsstufen der Stege des Aerosolseparators,
- Fig. 7a:: eine Draufsicht auf die Grundplatte eines Aerosolseparators mit Stegen gemäss Generation 1,
- Fig. 7b:: eine Draufsicht auf die Grundplatte eines Aerosolseparators mit Stegen gemäss Generation 3,
- Fig. 7c:: eine Draufsicht auf die Grundplatte eines Aerosolseparators mit Stegen gemäss Generation 5,
- Fig. 8a:: Ergebnisse einer Strömungssimulation in einem Aerosolseparator mit Stegen gemäss Generation 2,
- Fig. 8b.: Ergebnisse einer Strömungssimulation in einem Aerosolseparator mit Stegen gemäss Generation 3 und
- Fig. 8c.: Ergebnisse einer Strömungssimulation in einem Aerosolseparator mit Stegen gemäss Generation 5.

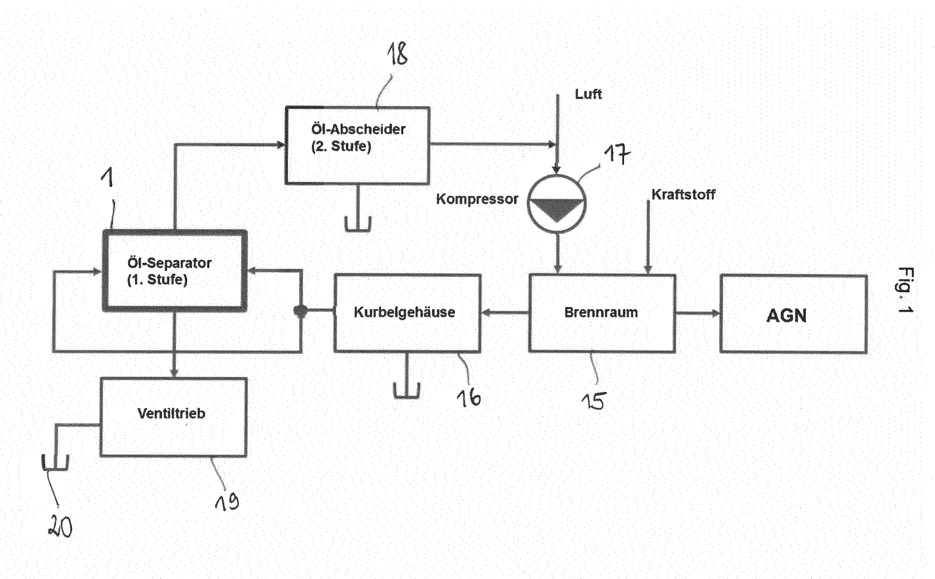

Fig. 1 zeigt ein Blockschaltbild zur Anordnung des Aerosolseparators in einem Ausführungsbeispiel, das bspw. in einem einstufig aufgeladenen als Reihenmotor ausgeführten Dieselmotor verwendet werden kann, dessen Ventiltrieb sich oberhalb der Zylinderköpfe bzw. oberhalb der Zylinderkopfbank befindet.

Das sogenannte Blow-by-Gas gelangt aus dem Brennraum 15 in das Kurbelgehäuse 16 und reisst Öltröpfchen mit. Damit, wie erforderlich, das Blow-by-Gas wieder dem Brennraum 15 zugeführt werden kann, muss es zur Niederdruckseite des Kompressors 17 gelangen. Um zu vermeiden, dass sich im Blow-by-Gas befindliche Aerosole (Öltröpfchen und Feststoffpartikel) dem Luftpfad zugeführt werden, was zu den bereits aufgezählten Nachteilen führen würde, wird das Blow-by-Gas über eine zweistufige Filtration - im Folgetext als Aerosolseparator 1 (bzw. Öl-Separator) und Ölabscheider 18 genannt - geleitet. Aufgrund der heutigen hohen Leistungsdichten von Verbrennungskraftmaschinen muss auch für den Pfad des Blow-by-Gases die Bereitstellung eines ausreichend grossen Strömungsquerschnittes auf dem beschränkten Bauraum eine besondere Beachtung finden. Deshalb ist in einer bevorzugten Ausführung des erfindungsgemässen Aerosolseparators 1 eine beidseitige Zuführung von Blow-by-Gas vorgesehen. In seiner bevorzugten Anordnung in der Verbrennungskraftmaschine 14 tropft das im Aerosolseparator 1 abgeschiedene Motoröl direkt in den Hohlraum oberhalb des Zylinderkopfes in dem sich der Ventiltrieb 19 befindet.

Bekanntermassen handelt es sich bei dem Ventiltrieb 19 um eine Funktionsgruppe, die einen hohen Bedarf an Ölschmierung aufweist, weshalb von dort ein vergleichsweise hoher Rückfluss von Motoröl in die Ölwanne vorliegt 20. Aufgrund dessen gelangen anderweitige im Aerosolseparator 1 aus dem Blow-by-Gas abgeschiedene Feststoff-Aerosole wie bspw. Russ zumindest überwiegend letztlich auch in die Ölwanne 20 und setzen sich an ihrem Boden oder im Ölfilter ab.

Aus dem Äerosolseparator 1 fliessen die auf ihren Boden gelangten Aerosole über eine Abflussöffnung in den den Ventiltrieb 19 beherbergenden Hohlraum ein und können von dort zur Ölwanne abfliessen.

Das gefilterte Blow-by-Gas, wird aus dem Aerosolseparator 1 über den Ölabscheider 18 an die Saugseite des Kompressors 17 geführt, von wo aus es dann erneut in einen Brennraum 15 gelangt.

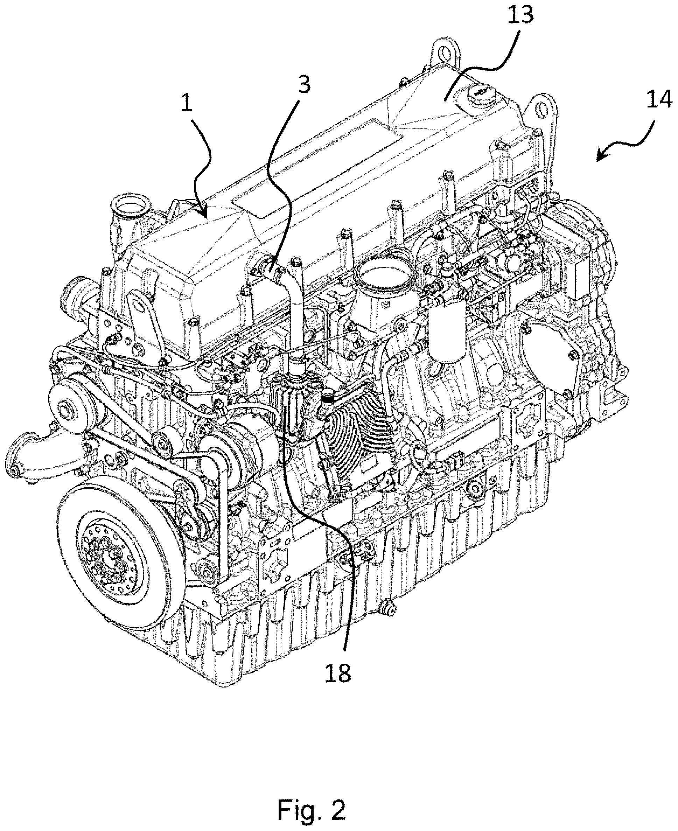

Fig. 2 zeigt eine perspektivische Ansicht einer Verbrennungskraftmaschine 14 in die ein Aerosolseparators 1 unterhalb ihres Zylinderkopfdeckels 13 integriert ist. Man erkennt die Auslassöffnung 3, aus der gereinigtes Blow-by-Gas herausgeführt und dem strömungsabwärts angeordneten Ölabscheider 18 zugeführt wird.

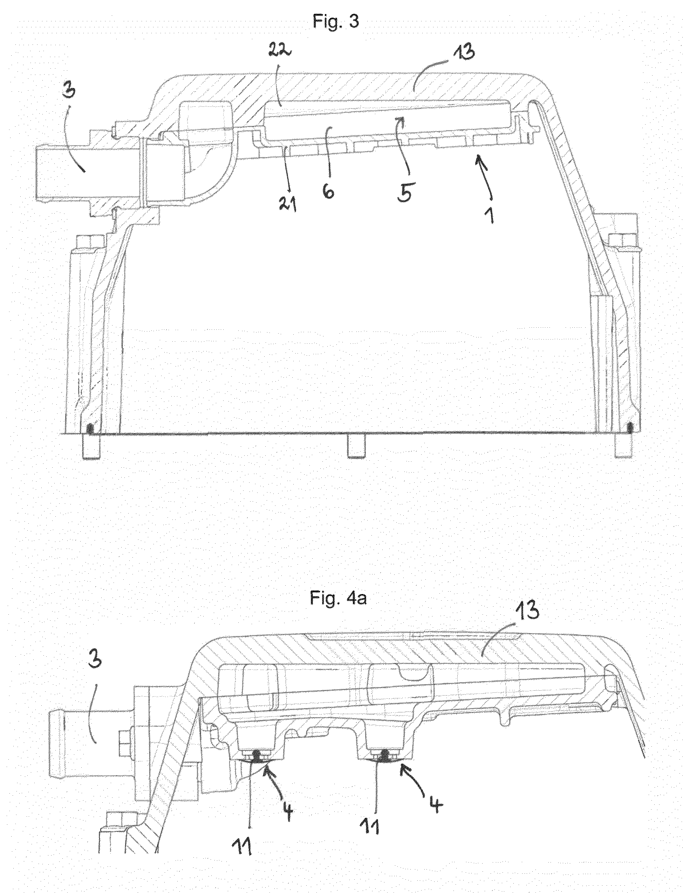

Fig. 3 ist eine Schnittdarstellung des Zylinderkopfdeckels 13, in dessen oberen Bereich der Aerosolseparator 1 angeordnet ist.

Die Hauptbestandteile eines solchen Aerosolseparators 1 in einer möglichen Ausführungsform sind ein wannenförmiges Unterteil 21 und ein wannenförmiges Oberteil 22. Die Führungswände für das Blow-by Gas können dann in dem Unterteil 21 und im Oberteil 22 jeweils spiegelbildlich gleich zueinander ausgeprägt sein, so dass ein Befestigen der beiden Bestandteile aneinander den gewünschten mäanderförmigen Strömungskanal ergibt. Nach der Grundidee der Erfindung ist es aber ebenso möglich, dass sich die Strömungswände komplett im Unterteil 21 befinden, so dass deren Oberseite unmittelbar bzw. mittelbar über eine Dichtung an einem eben ausgeformten Oberteil 22 anliegt.

Wenn das Unterteil 21 und das Oberteil 22 miteinander verbunden sind, ist - abgesehen von der mindestens einen Zuführöffnung für den Blow-by-Gas-Einlass, der für das Blow-by-Gas vorgesehenen Auslassöffnung 3 und der mindestens einen Ölabflussöffnung 4 der als Strömungskanal 5 dienende Hohlraum zwischen Unterteil 21 und Oberteil 22, der treffenderweise als Labyrinth bezeichnet werden kann, nach Aussen verschlossen.

In einer speziellen Ausführungsform ist eine Ausbildung des Oberteils 22 im Zylinderkopfdeckel 13 möglich.

Wie in Fig. 1 bereits angedeutet, befinden sich ausgehend von dem Inneren des Kurbelgehäuses zwei Zuführöffnungen 2, die einen Blow-by-Gas-Eintritt in den Aerosolseparator 1 hinein ermöglichen. Für die Erfindung ist das Vorhandensein von zwei Zuführöffnungen nicht wesentlich, jedoch vorteilhaft, da die relevanten Abmessungen und die Maximalleistung der Verbrennungskraftmaschine 14 in einem entsprechenden Verhältnis stehen, wodurch eine Aufteilung der Strömung des Blow-by-Gases zweckmässiger ist, obgleich sich hierdurch der Strömungspfad im Labyrinth verkürzt.

In Fig. 3 erkennt man weiter, dass das Oberteil 21 nicht horizontal ausgerichtet ist, sondern - bei einer normalen Orientierung des Separators - schräg zu einer Horizontalen geneigt ist. Dies führt dazu, dass die auf den Boden abgesunkenen Aerosole hin zum tiefsten Punkt des Bodens herabfließen bzw. mitbewegt werden, wo vorzugsweise eine Abflussöffnung 4 angeordnet ist.

Fig. 4a zeigt zwei solche Abflussöffnungen 4, die in Breitenrichtung versetzt zueinander angeordnet sind. Jede der Abflussöffnungen 4 ist dabei in einer im Bodenbereich des Aerosolseparators 1 vorgesehenen Vertiefung 10 angeordnet, so dass sich auch eine gewisse Menge an Aerosolen in den Vertiefungen ansammeln kann.

Die Abflussöffnungen 4 sind zudem jeweils mit einem Einwegventil 11 versehen, welches sicherstellt, dass keine Aerosole durch Abflussöffnungen 4 in das Innere des Aerosolseparators gelangen. Ein solches Einwegventil 11 gestattet nur das Abfließen von Öltröpfchen aus dem Aerosolseparator 1 heraus. Das Entsprechende gilt für das Mitbewegen von Feststoff-Aerosolen.

Das Unterteil 21 und/oder das Oberteil 22 können als Gussteil gefertigt sein, bspw. aus einer Aluminiumlegierung. Alternativ ist eine Fertigung aus Kunststoff möglich.

Ebenso ist eine Fertigung mittels 3D-Druck bzw. mittels eines Verfahrens möglich, welches unter den Sammelbegriff *Additive Manufacturing* anzusehen ist.

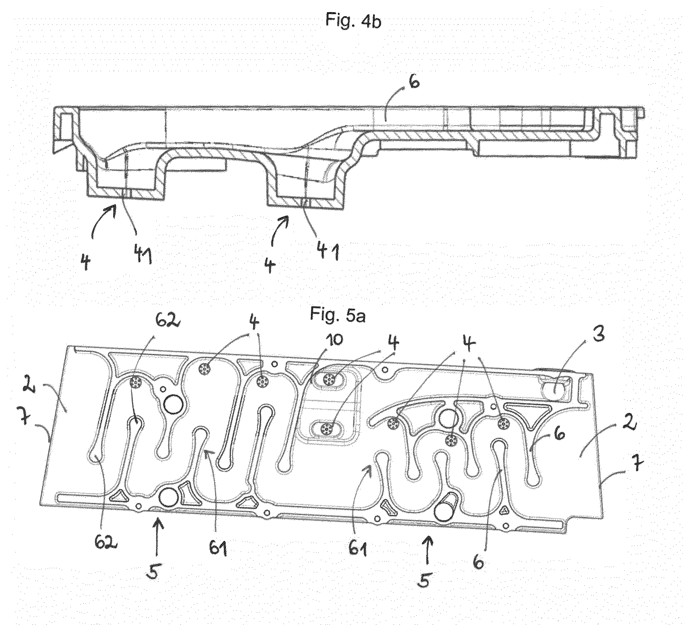

Fig. 4b zeigt die Abbildung der Fig. 4a ohne die Ventile 11. Man erkennt, dass die Abflussöffnungen 4 durch Bohrungen 41 umgesetzt sein können.

Fig. 5a zeigt eine perspektivische Darstellung des Unterteils 21 des Separators 1. Wie man dieser Figur entnehmen kann, ist an den beiden Breitenseiten des Separator-Grundaufbaus 7 demnach jeweils eine Zuführöffnung 2 für das Einströmen von Blow-by-Gas vorhanden. Die Zuführöffnungen 2 und die jeweils nahegelegenen Abschnitte des Strömungspfades weisen eine vergleichsweise grosse Querschnittsfläche auf.

Strömungsabwärts ist dann jeweils ein durch Stege 6 gebildeter Strömungspfad 5 vorhanden, der das Blow-by-Gas entlang eines Kanals mit deutlich geringerer Breite führt. Besonders auffallend ist der mäanderförmige Verlauf der Strömungspfade 5, die sich jeweils von der Zuführöffnung 2 zu den in der Vertiefung 10 angeordneten Abflussöffnungen 4 erstreckt.

Etwa im Zentrum des Aerosolseparators 1 liegt ein Volumenabschnitt vor, in dem sich die beiden aufeinander zubewegenden Strömungspfade 5 treffen. Von dort führt ein gemeinsamer Ausgangspfad zur Auslassöffnung 3, von wo aus das Blow-by-Gas den Aerosolseparator 1 verlässt, um von dort aus in eine zweite Filterstufe, den Ölabscheider 18 zu gelangen, die jedoch nicht mehr Bestandteil der vorliegenden Erfindung ist.

Der besagte Volumenabschnitt in dem die aufeinander zulaufenden Strömungspfade 5 aufeinandertreffen steht dem Blow-By-Gasstrom in Bezug zu seiner Hauptströmungsrichtung eine deutlich grössere Querweite und damit eine deutlich grössere Querschnittsfläche zur Verfügung.

Wie man erkennen kann, sind in dem Labyrinth nach Fig. 5a entlang des Strömungspfades 5 keinerlei deckungsgleiche Serpentinen vorhanden. Ursache hierfür ist die Tatsache, dass es sich bei den Ausführungsbeispielen um eine in die Verbrennungskraftmaschine 14 zu integrierende Baueinheit handelt und auf eine Vielzahl von anderen konstruktionstechnisch vorhandenen Einschränkungen zu achten ist.

Daher sind das verbleibende Längen- und Breitenabmass der Zylinderkopfbank 12 limitierend für die Fläche des Labyrinths, entlang derer sich die Strömungspfade 5 für das Blow-by-Gas innerhalb des Aerosolseparators 1 erstrecken können. Hinzu kommt der Flächenbedarf für den Auslass 3 des Blow-by-Gases sowie bestimmte Teilbereiche, die aufgrund von Verschraubungen nicht zur Ausbildung des Strömungspfades 5 zur Verfügung stehen. Dennoch weist der gesamte Abschnitt, in denen der Strömungspfad 5 eine mäanderförmige Charakteristik vorliegt, gemeinsame Merkmale auf.

So erkennt man, dass die Stege 6 an ihrem distalen Endbereich 61 einen Abschnitt 62 mit einer zunehmenden Stegbreite aufweisen und in diesem Ausführungsbeispiel etwa tropfenförmig auslaufen.

Auch sieht man, dass die Orientierung der Stege 6 der aufeinander zulaufenden Strömungspfade 5 nicht identisch ist, sondern divergiert. Die Stegorientierung ist jeweils hin zur zugehörigen Breitenseite 7 verdreht, so dass insgesamt ein etwas längerer Strömungspfad 5 entsteht, der von dem Blow-by-Gas durchströmt werden muss, bevor dieses den etwa mittig angeordneten Vereinigungsbereich der beiden Strömungspfade 5 erreicht, als dies ohne ein Verdrehen der Stegorientierung der Fall gewesen wäre.

Das Unterteil 21 des Aerosolseparators 1 kann zudem zu einer der Längsseiten geneigt sein und ist in einer solchen Ausführungsform um die Längsachse oder einer dazu parallelen Achse geneigt. Dabei kann die Neigung des Unterteils 21 dazu führen, dass die sich auf seinen Boden abgesunkenen Aerosole zu der tieferliegenden Längsseite hinabfliessen bzw. dorthin mitbewegt werden. Dabei sind die Abflussöffnungen 4 vorzugsweise näher an derjenigen Längsseite angeordnet, zu denen sich die Aerosole schwerkraftbedingt hinbewegen. Zudem kann, wie man der Fig. 5a entnehmen kann, auch vorgesehen sein, dass nicht nur im Vereinigungsbereich der beiden aufeinander zulaufenden Strömungspfade 5 Abflussöffnungen 4 vorgesehen sind, sondern auch in den Kurvenabschnitten bzw. Scheitelabschnitten der jeweiligen Strömungspfade 5. Bevorzugt natürlich an eben jenen Kurvenabschnitten bzw. Scheitelabschnitten, die aufgrund der Neigung auf der tiefer gelegenen Längsseite des Unterteilbodens näherliegen.

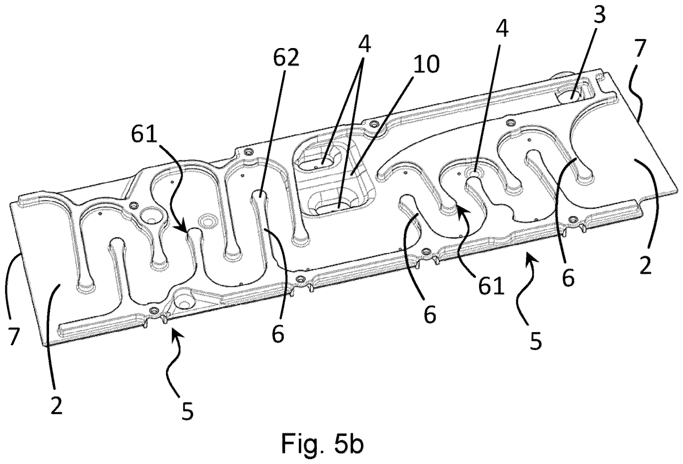

Fig. 5b zeigt eine weitere Ausführungsform des Unterteils 21 des Separators 1 in einer perspektivischen Ansicht. Man erkennt dieselben Strukturen wie in Fig. 5a.

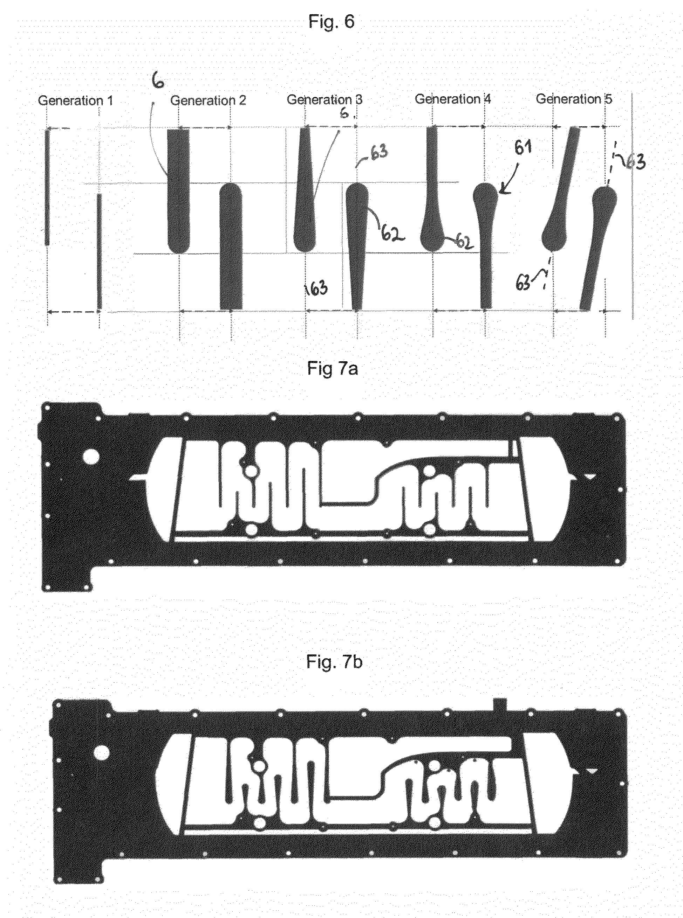

Fig. 6 zeigt die Draufsicht von verschiedenen Entwicklungsstufen der Stege 6, aus denen der mäanderförmigen Strömungspfad 5 gebildet werden kann.

In der 2. Generation wurde aus den dünnwandigen Stegen mit kantigen Enden, etwas dickere Stege, die an ihrem distalen Ende verrundet ausgeführt sind. In 3. Generation haben die Stege 6 die Form einer Keule, wobei das verrundete Ende aus der 2. Generation beibehalten worden ist. Der Durchmesser der Stege weitet sich dabei zum Ende hin langsam auf, bevor es in ein abgerundetes Ende übergeht. Die 4. Generation weist dann das tropfenförmige Auslaufen der Stege auf, bei denen der Querschnitt zunächst gleichbleibt und erst zum Ende hin eine Verbreiterung vorliegt, die in etwa die Form eines auslaufenden Tropfens aufweist. Die 5. Generation basiert auf der 4. Generation und nimmt nun noch das Verdrehen der Längsrichtung der Stege hinzu, wodurch die Gesamtlänge des Strömungspfads ansteigt, wobei dieser Vorteil nicht durch eine Verengung des Strömungsquerschnitts erkauft wird.

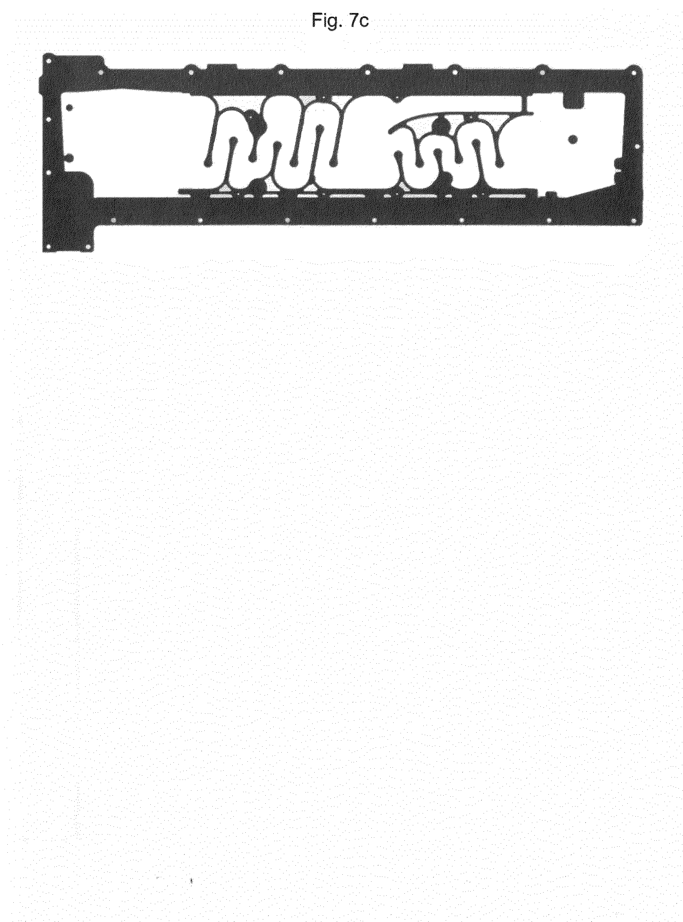

Figs. 7a-c zeigen jeweils eine Draufsicht auf ein Unterteil 21 eines Aerosolseparators, wobei das Unterteil 21 der Fig. 7a mit Stegen 6 aus der 2. Generation, das Unterteil 21 der Fig. 7b mit Stegen 6 aus der 3. Generation und das Unterteil 21 der Fig. 7c mit Stegen 6 aus der 5. Generation versehen ist.

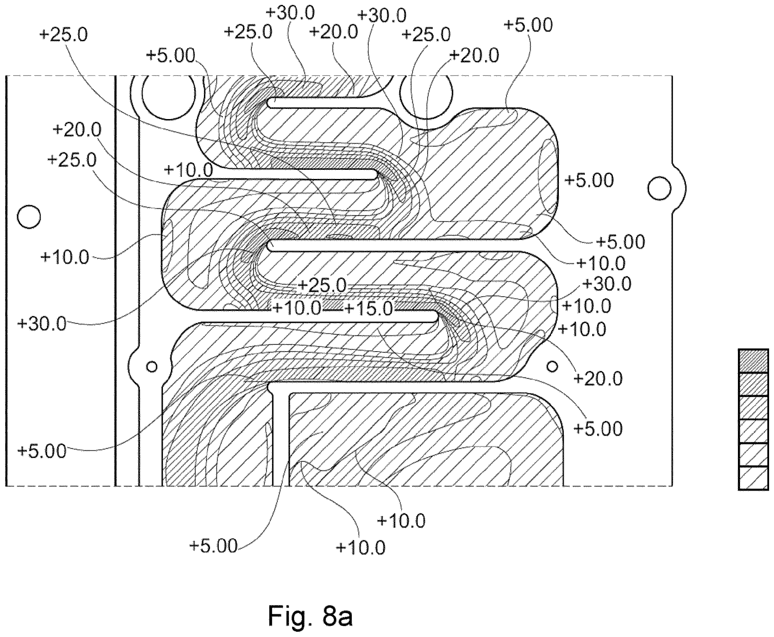

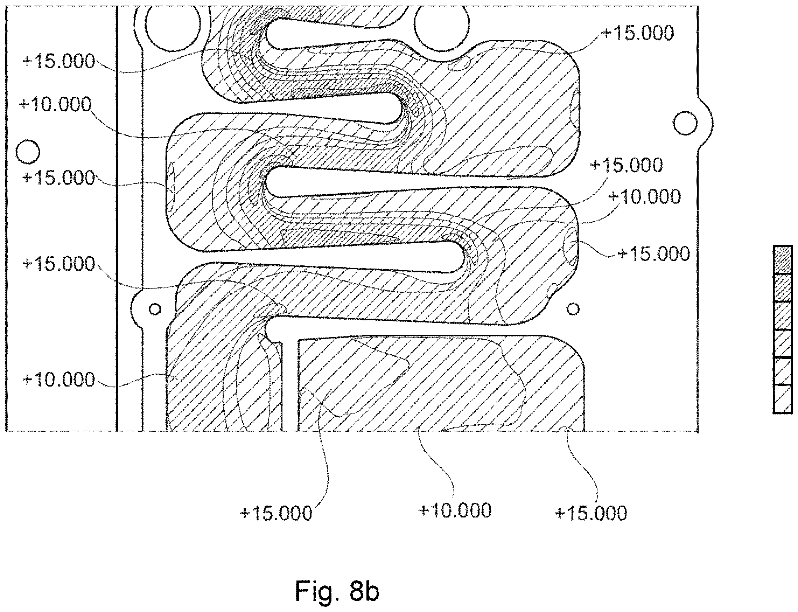

Figs. 8a und 8b zeigen jeweils für einen Teilbereich des Aerosolseparators die Strömungsgeschwindigkeit des Blow-by-Gases in Form von Konturplots basierend auf Strömungssimulationen. Man kann erkennen, dass die Stege 6 der 2. Generation dazu führen, dass die Geschwindigkeit nach dem Abreissen der Strömung an dem distalen Ende eines Steges 6 höher ist, als dies bei den Stegen 6 der 3. Generation der Fall ist, obwohl die Kanalbreite und damit die Querschnittsfläche des Strömungspfades der 3. Generation geringer ist. Die an den Konturlinien angegebenen Werte in den jeweiligen Figuren geben dabei die Geschwindigkeit des Blow-by-Gases in der Einheit m/s an.

Wie bspw. in den Figs. 8b und 5a zu erkennen, ist die Kanalweite und damit der Querschnitt der Strömungspfade 5 in den Bereichen zwischen den Stegenden und dem jeweils gegenüberliegen Wandbereich des Strömungspfades 5 erheblich größer als zwischen den zwei benachbarten Stegen 6. In großen Anteilen dieser jeweiligen Bereiche kommt die Strömung des Blow-by-Gases nahezu zum Erliegen, was das dortige Absinken von Aerosolen begünstigt, wohingegen das Aufwirbeln von bereits absinkenden oder sich bereits auf dem Boden befindenden Aerosolen unterbunden wird.

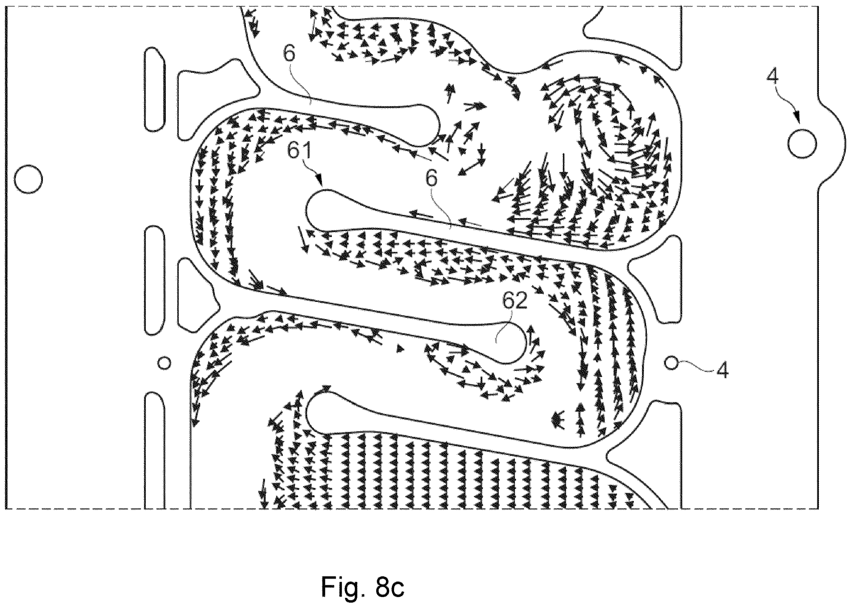

Wie in den Figs. 5a und 5b zu erkennen, befinden sich in Bezug auf die Hauptströmungsrichtung entlang der beiden Strömungspfade 5 die entlang der Serpentinen angeordneten Abflussöffnungen 4 stets vor den Scheitelpunkten der Serpentinen. Aufgrund ihrer Trägheit liegt für das Kollektiv der Aerosole bei dem Zuströmen in eine jeweilige Kurve eine weitaus geringere Anpassung der Strömungsrichtung in Bezug auf die Resultierende des Strömungspfades vor als dies für das Blow-by-Gas der Fall ist. Dies ist vergleichbar mit einem Fahrzeug, welches mit einer überhöhten Geschwindigkeit in eine Kurve hineinfährt. Unmittelbar bevor die Aerosole im Fall einer ungehinderten Bewegung die dem Stegende gegenüberliegende Wand des Strömungspfade 5 erreichen, werden diese in der Regel aufgrund der dortigen Strömung des Blow-by-Gases fortgerissen. Es ist nicht unüblich, dass die Strömungsrichtung der Aerosole aufgrund sich deutlich von der Strömungsrichtung reinen Gases signifikant unterscheidet und teilweise so stark abweicht, dass diese sogar auf kurzen Strecken entgegengesetzt zueinander verlaufen kann, was letztlich zu einer Geschwindigkeitsänderung der Aerosole führt. Im Nahbereich der in der Fig. 8c eingezeichneten und markierten Abflussöffnung 4 liegt ein Aufeinandertreffen von aus verschiedenen Richtungen kommende Teilströmungen, d.h. ein Strudel vor, wodurch eine starke Sogwirkung auf die Aerosole hin zum Boden des Aerosolseparators ausgeübt wird. Unter der Zielsetzung, dem Blow-by-Gas Aerosole zu entziehen und diese gesondert aus dem Aerosolseparator abzuleiten, ist eine Platzierung einer Abflussöffnung 4 in das Zentrum eines solchen Strudels klarerweise sehr vorteilhaft.

Fig. 8c zeigt eine Umsetzung mit Stegen 6 aus der 5. Generation, bei der die Geschwindigkeit als Vektorfeld dargestellt ist.

### Bezugszeichenliste:

- 1: Aerosolseparator
- 2: Zuführöffnung
- 3: Auslassöffnung
- 4: Abflussöffnung
- 41: Abflussöffnungsbohrung
- 5: Strömungspfad
- 6: Steg / Stege
- 61: distaler Endbereich des Stegs
- 62: Abschnitt mit zunehmender Stegbreite
- 63: Längsrichtung eines Stegs
- 7: Breitenseiten des Separator-Grundaufbaus
- 8: Längsrichtung des Separators
- 9: Höhe eines Strömungspfads im Labyrinth
- 10: Vertiefung im Bodenbereich des Separators
- 11: Rückschlagventil
- 12: Zylinderkopfbank
- 13: Zylinderkopfdeckel
- 14: Verbrennungskraftmaschine
- 15: Brennraum
- 16: Kurbelgehäuse
- 17: Kompressor
- 18: Ölabscheider, 2. Filterstufe
- 19: Ventiltrieb
- 20: Ölwanne
- 21: Unterteil des Separators
- 22: Oberteil des Separators

## Patentansprüche

1. Aerosolseparator (1) zum Abscheiden von Aerosolen in einem Blow-by-Gas, umfassend:
mindestens eine Zuführöffnung (2) zum Zuführen eines mit Aerosolen versehenen Blow-by-Gases,
eine Auslassöffnung (3) zum Abführen eines von Aerosolen gereinigten Blow-by-Gases,
mindestens eine Abflussöffnung (4) zum Ablassen von aus dem Blow-by-Gas entnommenen Aerosol, die zwischen einem Strömungspfad (5) der mindestens einen Zuführöffnung (2) und der Auslassöffnung (3) angeordnet ist, und
mehrere Stege (6) zum mäanderförmigen Ausgestalten des von der mindestens einen Zuführöffnung (2) zu der Abflussöffnung (4) verlaufenden Strömungspfads (5), um das in die Zuführöffnung (2) eintretende, mit Aerosolen versehene Blow-by-Gas in seiner Strömungsgeschwindigkeit zu verlangsamen, wobei
die Stege (6) in ihrem vom Blow-by-Gas umströmten Endbereich (61) einen Abschnitt mit zunehmender Stegbreite (62) aufweisen;
**dadurch gekennzeichnet, dass**
der Aerosolseparator (1) um die Achse seiner Längsausdehnung geneigt ist, und die Abflussöffnung (4) oder mehrere Abflussöffnungen (4) in einem tieferliegenden Bereich des schräg gestellten Aerosolseparators (1) angeordnet ist bzw. sind, um einen Zufluss von einer an einem Bodenbereich fließenden Aerosolansammlung zu fördern, und/oder
mindestens eine Abflussöffnung (4) stromabwärts des mäanderartig ausgeformten Strömungspfads (5) angeordnet ist und alternativ oder zusätzlich dazu, mindestens eine Abflussöffnung (4) in einer oder mehreren Kurven des mäanderförmigen Strömungspfads (5) angeordnet ist.

2. Aerosolseparator (1) nach Anspruch 1, wobei die Stege (6) in ihrem Endbereich (61) verrundet ausgeformt sind, vorzugsweise zu ihrem Ende hin in einer Tropfenform auslaufen.

3. Aerosolseparator (1) nach einem der vorhergehenden Ansprüche, wobei die mehreren Stege (6) jeweils eine Längsrichtung (63) aufweisen, die parallel oder in etwa parallel zueinander verlaufen.

4. Aerosolseparator (1) nach einem der vorhergehenden Ansprüche, wobei der Endbereich (61) eines jeweiligen Stegs (6) dessen distales Drittel, vorzugsweise Viertel, bevorzugterweise Fünftel der Gesamtlänge des zugehörigen Stegs (6) darstellt.

5. Aerosolseparator (1) nach einem der vorhergehenden Ansprüche, wobei die mehreren Stege (6) gegenüber einer Resultierenden der mäanderförmigen Strömungsrichtung des Strömungspfads (5) und/oder einer Längsrichtung (8) des Aerosolseparators (1) nicht senkrecht stehen, sondern vorzugsweise damit einen spitzen Winkel einschließen, der bevorzugterweise zwischen 90° und 45° liegt.

6. Aerosolseparator (1) nach einem der vorhergehenden Ansprüche, wobei der Aerosolseparator (1) einen im Wesentlichen länglichen Grundaufbau und an seinen beiden gegenüberliegenden Breitenseiten (7) jeweils eine Zuführöffnung (2) aufweist, die jeweils zu der in Längsrichtung (8) des Aerosolseparators (1) im mittleren Drittel, vorzugsweise im mittleren Fünftel angeordneten Abflussöffnung (4) über einen durch Stege (6) mäanderförmig ausgestalteten Strömungspfad (5) führen.

7. Aerosolseparator (1) nach Anspruch 6, wobei
die beiden von gegenüberliegenden Breitenseiten (7) zur Abflussöffnung (4) führenden Strömungspfade (5) jeweils mehrere Stege (6) aufweisen,
jeder der beiden Strömungspfade (5) mehrere Stege (6) aufweist, deren Längsrichtungen (63) parallel oder in etwa parallel zueinander verlaufen, und
die Stege (6) der beiden Strömungspfade (5) nicht in etwa parallel zueinander ausgerichtet sind, sondern einen Winkel im Bereich von 40° - 15°, vorzugsweise 35° - 25° einschließen.

8. Aerosolseparator (1) nach einem der vorhergehenden Ansprüche, wobei Teile des oder der gesamte von dem Blow-by-Gas durchströmte Raum in dem Aerosolseparator (1) durch eine kantenfreie, vorzugsweise tangentenstetige Oberfläche begrenzt ist.

9. Aerosolseparator (1) nach einem der vorhergehenden Ansprüche, wobei Teile des oder der gesamte von dem Blow-by-Gas durchströmte Raum in dem Aerosolseparator (1) durch eine Oberfläche begrenzt ist, die eine raue Oberfläche aufweist, um das Anhaften von Aerosolen zu begünstigen, wobei vorzugsweise die Stege (6) mit einer rauen Oberfläche versehen sind.

10. Aerosolseparator (1) nach einem der vorhergehenden Ansprüche, wobei der durch die Stege (6) mäanderförmig ausgestaltete Strömungspfad (5) von der Zuführöffnung (2) zur Abflussöffnung (4) eine Höhe (9) aufweist, die in etwa konstant ist, also um weniger als 10%, vorzugsweise um weniger als 5% von einer maximalen Höhe abnimmt.

11. Aerosolseparator (1) nach einem der vorhergehenden Ansprüche, wobei
die mindestens eine Abflussöffnung (4) in einem Scheitelbereich des mäanderförmig ausgestalteten Strömungspfads (5) angeordnet ist und/oder stromabwärts des mäanderförmigen Strömungspfads (5) kurz vor der Auslassöffnung (3) angeordnet ist, und/oder
die mindestens eine Abflussöffnung (4) in einer zum Rest des Strömungspfads (5) von der Zuführöffnung (2) zur Auslassöffnung (3) vorgesehenen Vertiefung (10) angeordnet ist, und/oder
die mindestens eine Abflussöffnung (4) in einem Bereich des Strömungspfads (5) angeordnet ist, der sich durch eine besonders geringe Strömungsgeschwindigkeit eines durch den Aerosolseparator (1) strömenden Blow-by-Gases auszeichnet, also eine Strömungsgeschwindigkeit aufweist, die zum langsamsten Drittel, vorzugsweise langsamsten Viertel, bevorzugterweise langsamsten Fünftel der Strömungsgeschwindigkeiten gehört, und/oder
die mindestens eine Abflussöffnung (4) in einem Bereich des Aerosolseparators (1) angeordnet ist, in denen lokal aus verschiedenen Richtungen kommende Teilströmungen aufeinandertreffen, und/oder
die mindestens eine Abflussöffnung (4) in einem Bodenbereich des Aerosolseparators (1) angeordnet ist.

12. Aerosolseparator (1) nach einem der vorhergehenden Ansprüche, wobei mindestens ein Rückschlagventil (11) vorgesehen ist, das eine jeweilige Abflussöffnung (4) abdeckt, um zu verhindern, dass eigentlich abfließende Aerosole entgegen der ursprünglich vorgesehenen Abflussrichtung in den Aerosolseparator (1) einströmen.

13. Aerosolseparator (1) nach einem der vorhergehenden Ansprüche, wobei eine Abflussöffnung (4) mehrere Öffnungen, insbesondere Bohrungen (41), in einer Bodenplatte des Aerosolseparators (1) umfassen kann, die sämtlich durch ein gemeinsames Rückschlagventil (11) abgedeckt sind.

14. Verbrennungskraftmaschine (14) mit einem Aerosolseparator (1) zum Abscheiden von Aerosolen in einem Blow-by-Gas nach einem der vorhergehenden Ansprüche, vorzugsweise wobei der Aerosolseparator (1) oberhalb der Zylinderkopfbank (12) angeordnet ist und/oder sich unterhalb des Zylinderkopfdeckels (13) befindet.

## Claims

1. Aerosol separator (1) for separating aerosols in a blow-by gas, comprising:
at least one feed opening (2) for feeding a blow-by gas provided with aerosols,
an outlet opening (3) for discharging a blow-by gas cleaned of aerosols,
at least one outflow opening (4) for releasing aerosols removed from the blow-by gas, and which is arranged between a flow path (5) of the at least one feed opening (2) and the outlet opening (3), and
a plurality of projections (6) for configuring the flow path (5) running from the at least one feed opening (2) to the outflow opening (4) in a meandering manner, in order to decelerate the blow-by gas which enters the feed opening (2) and which is provided with aerosols, in terms of its flow rate,
wherein
the projections (6) in their end region (61), around which blow-by gas flows, have a portion with increasing projection width (62);
**characterized in that**
the aerosol separator (1) is inclined about the axis of its longitudinal extent, and the outflow opening (4) or a plurality of outflow openings (4) is and/or are arranged in a deeper region of the obliquely positioned aerosol separator (1), in order to promote an inflow of collected aerosols flowing on a bottom region, and/or
at least one outflow opening (4) is arranged downstream of the flow path (5) which is shaped in a meandering manner and, alternatively or additionally, at least one outflow opening (4) is arranged in one or more curves of the meandering flow path (5).

2. Aerosol separator (1) as claimed in claim 1, wherein the projections (6) are of rounded shape in their end region (61), and preferably taper toward the end thereof in a droplet shape.

3. Aerosol separator (1) as claimed in one of the preceding claims, wherein the plurality of projections (6) in each case have a longitudinal direction (63) running parallel or approximately parallel to one another.

4. Aerosol separator (1) as claimed in one of the preceding claims, wherein the end region (61) of one respective projection (6) represents the distal third, preferably quarter, preferably fifth thereof, of the total length of the associated projection (6).

5. Aerosol separator (1) as claimed in one of the preceding claims, wherein the plurality of projections (6) are not located perpendicular relative to a resultant of the meandering direction of flow of the flow path (5) and/or a longitudinal direction (8) of the aerosol separator (1), but preferably enclose therewith an acute angle which is preferably between 90° and 45°.

6. Aerosol separator (1) as claimed in one of the preceding claims, wherein the aerosol separator (1) has a substantially elongated basic structure and on its two opposing wide sides (7) in each case has a feed opening (2) which in each case lead to the outflow opening (4) arranged in the longitudinal direction (8) of the aerosol separator (1) in the central third, preferably in the central fifth, via a flow path (5) which is configured in a meandering manner by projections (6).

7. Aerosol separator (1) as claimed in claim 6, wherein
the two flow paths (5) leading from opposing wide sides (7) to the outflow opening (4) in each case have a plurality of projections (6),
each of the two flow paths (5) has a plurality of projections (6), the longitudinal directions (63) thereof running parallel or approximately parallel to one another, and
the projections (6) of the two flow paths (5) are not oriented approximately parallel to one another but enclose an angle in the range of 40° - 15°, preferably 35° - 25°.

8. Aerosol separator (1) as claimed in one of the preceding claims, wherein parts of the space or the entire space through which the blow-by gas flows in the aerosol separator (1) is delimited by a surface without edges, preferably with tangential continuity.

9. Aerosol separator (1) as claimed in one of the preceding claims, wherein parts of the space or the entire space through which the blow-by gas flows in the aerosol separator (1) is delimited by a surface which has a rough surface in order to promote the adhesion of aerosols, wherein preferably the projections (6) are provided with a rough surface.

10. Aerosol separator (1) as claimed in one of the preceding claims, wherein the flow path (5) which is configured in a meandering manner by the projections (6) from the feed opening (2) to the outflow opening (4) has a height (9) which is approximately constant, i.e. decreases from a maximum height by less than 10%, preferably by less than 5%.

11. Aerosol separator (1) as claimed in one of the preceding claims, wherein the at least one outflow opening (4) is arranged in an apex region of the flow path (5) which is configured in a meandering manner and/or is arranged downstream of the meandering flow path (5) just upstream of the outlet opening (3), and/or
the at least one outflow opening (4) is arranged in a recess (10) provided for the remainder of the flow path (5) from the feed opening (2) to the outlet opening (3), and/or
the at least one outflow opening (4) is arranged in a region of the flow path (5) which is **characterized by** a particularly low flow rate of a blow-by gas flowing through the aerosol separator (1), i.e. it has a flow rate which belongs to the slowest third, preferably the slowest quarter, preferably the slowest fifth of the flow rates, and/or
the at least one outflow opening (4) is arranged in a region of the aerosol separator (1) in which partial flows coming locally from different directions coincide, and/or
the at least one outflow opening (4) is arranged in a bottom region of the aerosol separator (1).

12. Aerosol separator (1) as claimed in one of the preceding claims, wherein at least one non-return valve (11) which covers one respective outflow opening (4) is provided in order to prevent the aerosols, which are actually flowing away, from flowing back into the aerosol separator (1) counter to the originally provided outflow direction.

13. Aerosol separator (1) as claimed in one of the preceding claims, wherein an outflow opening (4) may comprise a plurality of openings, in particular bores (41) in a base plate of the aerosol separator (1) which are all covered by a common non-return valve (11).

14. Internal combustion engine (14) having an aerosol separator (1) for separating aerosols in a blow-by gas as claimed in one of the preceding claims, wherein preferably the aerosol separator (1) is arranged above the cylinder head bank (12) and/or is located below the cylinder head cover (13).

## Revendications

1. Séparateur d'aérosols (1) destiné à séparer des aérosols dans un gaz de fuite, comprenant :
au moins une ouverture d'alimentation (2) destinée à amener un gaz de fuite pourvu d'aérosols,
une ouverture de sortie (3) destinée à évacuer un gaz de fuite épuré d'aérosols,
au moins une ouverture d'évacuation (4) destinée à évacuer l'aérosol éliminé du gaz de fuite, qui est disposée entre un trajet d'écoulement (5) de l'au moins une ouverture d'alimentation (2) et l'ouverture de sortie (3), et
plusieurs entretoises (6) destinées à configurer de manière sinueuse le trajet d'écoulement (5) s'étendant depuis l'au moins une ouverture d'alimentation (2) jusqu'à l'ouverture d'évacuation (4) pour ralentir la vitesse d'écoulement du gaz de fuite pourvu d'aérosols entrant dans l'ouverture d'alimentation (2),
dans lequel
les entretoises (6) présentent dans leur zone d'extrémité (61) entourée par le flux de gaz de fuite une section avec une largeur d'entretoise (62) croissante,
**caractérisé en ce que**
le séparateur d'aérosols (1) est incliné autour de l'axe d'une extension longitudinale,
et l'ouverture d'évacuation (4) ou plusieurs ouvertures d'évacuation (4) est disposée ou sont disposées dans une zone située davantage en profondeur du séparateur d'aérosols (1) placé de manière oblique pour favoriser un flux d'alimentation depuis une accumulation d'aérosols s'écoulant sur une zone de fond, et/ou
au moins une ouverture d'évacuation (4) est disposée en aval du trajet d'écoulement (5) formé de manière sinueuse et, en variante ou en supplément, au moins une ouverture d'évacuation (4) est disposée dans un ou plusieurs virages du trajet d'écoulement (5) sinueux.

2. Séparateur d'aérosols (1) selon la revendication 1, dans lequel les entretoises (6) sont formées de manière arrondie dans leur zone d'extrémité (61), de préférence convergent de préférence en direction de leur extrémité en une forme de goutte.

3. Séparateur d'aérosols (1) selon l'une quelconque des revendications précédentes, dans lequel les plusieurs entretoises (6) présentent respectivement une direction longitudinale (63), qui s'étendent de manière parallèle ou à peu près de manière parallèle les unes par rapport aux autres.

4. Séparateur d'aérosols (1) selon l'une quelconque des revendications précédentes, dans lequel la zone d'extrémité (61) d'une entretoise (6) respective constitue le tiers distal de celles-ci, de préférence le quart, idéalement le cinquième de la longueur totale de l'entretoise (6) associée.

5. Séparateur d'aérosols (1) selon l'une quelconque des revendications précédentes, dans lequel les plusieurs entretoises (6) ne sont pas perpendiculaires par rapport à une résultante de la direction d'écoulement sinueuse du trajet d'écoulement (5) et/ou d'une direction longitudinale (8) du séparateur d'aérosols (1), mais forment de préférence ainsi un angle aigu, qui se situe idéalement entre 90° et 45°.

6. Séparateur d'aérosols (1) selon l'une quelconque des revendications précédentes, dans lequel le séparateur d'aérosols (1) présente une structure de base sensiblement allongée et, sur leurs deux côtés de largeur (7) opposés, respectivement une ouverture d'alimentation (2), qui mènent respectivement à l'ouverture d'évacuation (4) disposée dans le tiers central, de préférence dans le cinquième central dans la direction longitudinale (8) du séparateur d'aérosols (1) par l'intermédiaire d'un trajet d'écoulement (5) configuré de manière sinueuse par des entretoises (6).

7. Séparateur d'aérosols (1) selon la revendication 6, dans lequel
les deux trajets d'écoulement (5) menant depuis des côtés de largeur (7) opposés à l'ouverture d'évacuation (4) présentent respectivement plusieurs entretoises (6),
chacun des deux trajets d'écoulement (5) présente plusieurs entretoises (6), dont les directions longitudinales (63) s'étendent de manière parallèle ou de manière à peu près parallèle les unes par rapport aux autres, et
les entretoises (6) des deux trajets d'écoulement (5) ne sont pas orientées à peu près de manière parallèle les unes par rapport aux autres, mais forment un angle dans la plage de 40° - 15°, de préférence de 35° - 25°.

8. Séparateur d'aérosols (1) selon l'une quelconque des revendications précédentes, dans lequel des parties de l'espace traversé par le gaz de fuite ou la totalité de celui-ci sont délimitées dans le séparateur d'aérosols (1) par une surface sans bord, de préférence tangentiellement continue.

9. Séparateur d'aérosols (1) selon l'une quelconque des revendications précédentes, dans lequel des parties de l'espace traversé par le gaz de fuite ou la totalité de celui-ci sont délimitées dans le séparateur d'aérosols (1) par une surface, qui présente une surface rugueuse pour favoriser l'adhérence d'aérosols, dans lequel de préférence les entretoises (6) sont pourvues d'une surface rugueuse.

10. Séparateur d'aérosols (1) selon l'une quelconque des revendications précédentes, dans lequel le trajet d'écoulement (5) configuré de manière sinueuse par les entretoises (6) présente depuis l'ouverture d'alimentation (2) à l'ouverture d'évacuation (4) une hauteur (9), qui est à peu près constante, donc diminue de moins de 10 %, de préférence de moins de 5°% d'une hauteur maximale.

11. Séparateur d'aérosols (1) selon l'une quelconque des revendications précédentes, dans lequel
l'au moins une ouverture d'évacuation (4) est disposée dans une zone de sommet du trajet d'écoulement (5) configuré de manière sinueuse et/ou est disposée en aval du trajet d'écoulement (5) sinueux peu avant l'ouverture d'évacuation (3), et/ou
l'au moins une ouverture d'évacuation (4) est disposée dans un renfoncement (10) prévu depuis l'ouverture d'alimentation (2) vers l'ouverture d'évacuation (3) par rapport au reste du trajet d'écoulement (5), et/ou
l'au moins une ouverture d'évacuation (4) est disposée dans une zone du trajet d'écoulement (5), qui se distingue par une vitesse d'écoulement en particulier modérée d'un gaz de fuite circulant à travers le séparateur d'aérosols (1), présente donc une vitesse d'écoulement, qui appartient au tiers le plus lent, idéalement au cinquième le plus lent des vitesses d'écoulement, et/ou
l'au moins une ouverture d'évacuation (4) est disposée dans une zone du séparateur d'aérosols (1), dans laquelle des écoulements partiels provenant localement de différentes directions se rencontrent, et/ou
l'au moins une ouverture d'évacuation (4) est disposée dans une zone de fond du séparateur d'aérosols (1).

12. Séparateur d'aérosols (1) selon l'une quelconque des revendications précédentes, dans lequel au moins une soupape anti-retour (11) est prévue, qui couvre une ouverture d'évacuation (4) respective pour empêcher que des aérosols s'évacuant à proprement parler affluent dans le séparateur d'aérosols (1) dans le sens opposé à la direction d'évacuation prévue à l'origine.

13. Séparateur d'aérosols (1) selon l'une quelconque des revendications précédentes, dans lequel une ouverture d'évacuation (4) peut comprendre plusieurs ouvertures, en particulier des alésages (41), dans une plaque de fond du séparateur d'aérosols (1), qui sont couvertes toutes par une soupape anti-retour (11) commune.

14. Machine à combustion interne (14) avec un séparateur d'aérosols (1) pour séparer des aérosols dans un gaz de fuite selon l'une quelconque des revendications précédentes, de préférence dans laquelle le séparateur d'aérosols (1) est disposé au-dessus du banc de culasse (12) et/ou se trouve en dessous du couvercle de culasse (13).
